(19)

**Europäisches Patentamt**
**European Patent Office**
**Office européen des brevets**

(11) **EP 4 553 714 A1**

(12) **EUROPEAN PATENT APPLICATION**

(43) Date of publication:
**14.05.2025 Bulletin 2025/20**

(21) Application number: **24184109.7**

(22) Date of filing: **24.06.2024**

(51) International Patent Classification (IPC):
**G06N 3/0895** (2023.01)      **G06N 3/045** (2023.01)
**G06N 3/0464** (2023.01)      **G06N 3/084** (2023.01)

(52) Cooperative Patent Classification (CPC):
**G06N 3/0464; G06N 3/045; G06N 3/084;**
**G06N 3/0895**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **09.11.2023 GB 202317175**

(71) Applicant: **DeepMind Technologies Limited**
**London EC4A 3TW (GB)**

(72) Inventors:
• **ILIC, Anastasija**
**London,EC4A 3TW (GB)**

• **BICA, Iona**
**London,EC4A 3TW (GB)**
• **BOSNJAK, Matko**
**London,EC4A 3TW (GB)**
• **ERDOGAN, Goker**
**London,EC4A 3TW (GB)**
• **BAUER, Matthias Stephan**
**London,EC4A 3TW (GB)**
• **BLUNDELL, Cherles**
**London,EC4A 3TW (GB)**
• **MITROVIC, Jovana**
**London,EC4A 3TW (GB)**

(74) Representative: **Marks & Clerk GST**
**1 New York Street**
**Manchester M1 4HD (GB)**

(54) **TRAINING MUTIMODAL MACHINE LEARNING MODELS TO PERFORM A TASK USING NOISY TRAINING DATASETS**

(57)      Methods, systems, and apparatus, including computer programs encoded on a computer storage medium, for training a multimodal machine learning model to perform a machine learning task. The multimodal machine learning model is trained on noisy batches of training data from one or more noisy training datasets, and on task-specific batches of training data from one or more further, task-specific training datasets. The multimodal machine learning model is disproportionately trained on noisy batches of training data, for example by training the model using a proportion of noisy training batches in the training data that is greater than a proportion of a number of the noisy training datasets in a total number of training datasets.

FIG. 1

**Description**

BACKGROUND

This specification relates to processing data using machine learning models.

Machine learning models receive an input and generate an output, e.g., a predicted output, based on the received input. Some machine learning models are parametric models and generate the output based on the received input and on values of the parameters of the model.

Some machine learning models are deep models that employ multiple layers of models to generate an output for a received input. For example, a deep neural network is a deep machine learning model that includes an output layer and one or more hidden layers that each apply a nonlinear transformation to a received input to generate an output.

SUMMARY

This specification generally describes a training system and method implemented as computer programs on one or more computers in one or more locations that can train a multimodal machine learning model to perform a machine learning task. More particularly the described techniques are able to make effective use of a combination of one or more very large but noisy training datasets, and a much smaller but higher quality, task-specific training dataset.

The invention is set out in claim 1. Further aspects are defined in the dependent claims.

In one aspect there is described a computer-implemented method of training a multimodal machine learning model to perform a machine learning task. The multimodal machine learning model has a multimodal input to receive a first modality input representing a sequence of text and a second modality input. The multimodal machine learning model is configured to jointly process an encoded version of the text and an encoded version of the second modality input, in accordance with learnable parameters of the multimodal machine learning model, to generate a model output that defines a result of the machine learning task.

The method involves obtaining one or more noisy training datasets comprising noisy training data items, each noisy training data item comprising an example sequence of text and an example of the second modality input. A noisy training dataset may be one in which, for some of the noisy training data items in the noisy training dataset (a semantic content of) the example sequence of text is unrelated to a semantic content of the example of the second modality input. As an illustration, if the second modality input comprises an image the corresponding sequence of text may say "click to enlarge".

The method also involves obtaining one or more further training datasets, smaller than each of the noisy training datasets and comprising task-specific training data items. Each task-specific training data item comprises a task-specific sequence of text and a task-specific example of the second modality input. Each task-specific training data item is an example of the machine learning task being performed. Thus a further training dataset may be described as a task-specific training dataset. However a task-specific training dataset is not necessarily specific to a single task, i.e. it may include task-specific training data items specific to a number of different tasks.

Two or more noisy batches of training data, comprising primarily or exclusively noisy training data items, are selected from the one or more noisy training datasets. Also one or more task-specific batches of training data, comprising primarily or exclusively task-specific training data items, are selected from the one or more further training datasets.

The multimodal machine learning model is trained on the noisy batches of training data and on the task-specific batches of training data. The training can use any training objective; merely as an example, one defined by a self-supervised objective function.

The method disproportionately trains the multimodal machine learning model using the noisy batches of training data. In implementations this can involve training the multimodal machine learning model using a proportion of noisy training batches in the training data that is greater than a proportion of a number of the noisy training datasets in a total number of the training datasets (the total number of training datasets is the number of noisy training dataset(s) plus the number of further training datasets). In implementations the further training dataset is at least one or two orders of magnitude smaller than each of the one or more noisy training datasets (as measured by a number of training data items it includes).

The subject matter described in this specification can be implemented in particular embodiments so as to realize one or more of the following advantages.

Typically when a machine learning model is trained to perform a particular task, such as a visual processing task, supervised learning is used based on a training dataset that includes example model input and output pairs. However such datasets tend to be relatively small, and more recently techniques have been borrowed from the training of large language models (LLMs). These techniques can train a multimodal model using very large but noisy datasets in which text is paired with an image, often imperfectly, and the model is trained, e.g. using self-supervised learning. The training dataset can, but may not, include any actual examples of the particular task, but nonetheless an ability to perform a particular task can emerge. For example, after training the task to be performed can be defined by a textual prompt that explains the task (zero-shot learning) and/or that gives a small number of examples of the task (few-shot learning).

It might be hypothesized that the performance of a model trained in this way could be improved by mixing into such a large but noisy dataset some specific examples of a particular task or tasks to be performed by the multimodal model, from one or more task-specific datasets. Alternatively, instead of simply mixing examples from the datasets a round-robin approach could be used in which the model is trained on each dataset in turn. However, surprisingly, it has been found that such approaches actually harm the performance of the trained model on the specific task(s). In contrast, for a given compute budget, e.g. a total number of floating point operations FLOPS available to train the model, implementations of the described techniques are able to achieve a very substantial performance improvement on one or more specific tasks by training disproportionately more with the noisy dataset(s) than with the further, task-specific dataset(s). Some supporting results for this are presented later. Interleaving batches of training data from the noisy dataset(s) and from the further, task-specific dataset(s) can result in improved training.

In implementations the ability to mix noisy and further, in particular task-specific training datasets facilitates training a multimodal machine learning model such as a VLM (Visual Language Model) using one or more very large, typically unlabeled datasets, e.g. using self-supervised learning such as contrastive learning, and at the same time leveraging the data in one or more small, high-quality datasets to target one or more specific abilities. In this context a large training dataset may have more than, e.g., $10^8$ or $10^9$ training data items whereas the small training dataset may have less than, e.g., $10^7$ or $10^6$ training data items. The multimodal machine learning model may be a so-called foundation model; the task-specific training dataset(s) can endow such a model with an ability to perform, or to provide greatly improved performance on, one or more particular tasks.

Although some examples of the technique are described in relation to VLMs (Visual Language Models), the technique can also be used where a large but noisy dataset is available in which text is paired with one or more other types of data, e.g. audio data, or data relating to the operation of an agent acting in an environment to perform a variety of tasks.

The details of one or more embodiments of the subject matter of this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1 is a block diagram of an example neural network training system that can train a multimodal machine learning model.
FIG. 2 is a flow diagram of a first example process for training a multimodal machine learning model.
FIG. 3 illustrates the operation of the first example process with multiple noisy training datasets and one task-specific training dataset.
FIG. 4 illustrates the operation of the first example process with multiple noisy training datasets and multiple further training datasets.
FIG. 5 is a flow diagram of a second example process for training a multimodal machine learning model.
FIG. 6 illustrates the performance of some example implementations of the described training methods.

Like reference numbers and designations in the various drawings indicate like elements.

DETAILED DESCRIPTION

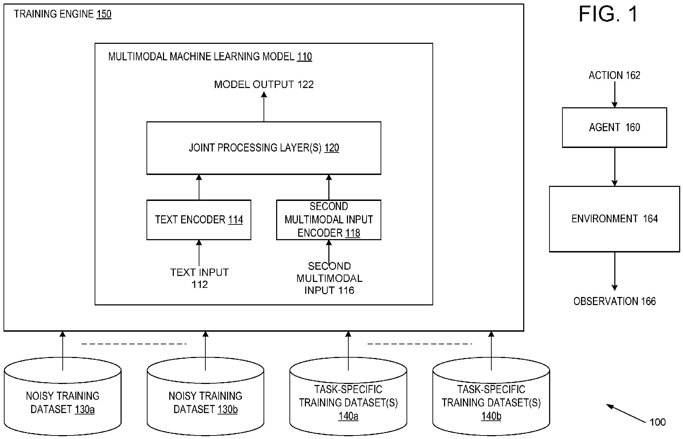

FIG. 1 shows an example neural network training system 100 that can train a multimodal machine learning model 110 to perform a machine learning task. The training system 100 is an example of a system implemented as computer programs on one or more computers in one or more locations in which the systems, components, and techniques described below are implemented.

In general the multimodal machine learning model 110 is a neural network model with a plurality of learnable parameters, such as weights, that are updated during training. Such a neural network model can have any appropriate architecture, such as an attention-based neural network architecture, e.g., a transformer architecture, a convolutional architecture, a fully-connected architecture, or any other appropriate neural network architecture. The model can include any appropriate types of neural network layers, e.g., convolutional layers, attention layers, fully connected layers, recurrent layers, and so forth, in any appropriate numbers, e.g., 10 layers, 100 layers, or 1000 layers, and connected in any appropriate configuration, e.g., as a linear sequence of layers or as a directed graph of layers. Some implementations of the models described herein can be described as "large" multimodal models, e.g. with more than $10^{10}$ learnable parameters, but applications of the described techniques are not restricted to such models.

As described below, the multimodal machine learning model 110 can include a text encoder 114 and a second multimodal input encoder 118. The learnable parameters of the multimodal machine learning model 110 may, but need not, include parameters of these encoders. For example previously trained encoders with frozen parameters may be used.

The multimodal machine learning model 110 has a multimodal input configured to receive a first multimodal input 112 and a second multimodal input 116. As used herein a "modality" refers to a type of data, and thus a multimodal machine learning model is one that can process multiple different types of data.

The first multimodal input 112 comprises a text input to receive a sequence of text. The second multimodal input 116 is configured to receive a different type of input data, and in some implementations second multimodal input comprises a visual input 116 to receive an image or video. Alternatively the second multimodal input may be configured to receive, e.g., audio data representing values of an audio waveform, e.g. instantaneous amplitude data or time-frequency domain data; or data representing observations (not necessarily visual) of an environment with which an agent controlled by the multimodal machine learning model 110 interacts. In some implementations there may be more than two different multimodal inputs, each configured to receive a different type of data.

The multimodal machine learning model 110 is configured to jointly process an encoded version of the text and an encoded version of the second multimodal input, e.g. of the image or video, to generate a model output 122 that defines a result of a machine learning task. A few examples of machine learning tasks that can be performed by the multimodal machine learning model 110 are described later.

The text received by text input 112 may comprise text in one or more natural languages, or text in a computer language, or both. The computer language may be any formal language used to communicate with a computer, e.g. a markup language, or a command or configuration language, or a data exchange language such as JSON, or a programming language. The text may be received, e.g., as a series of encoded characters, e.g. UTF-8 encoded characters; such "characters" can include Chinese and other similar characters, as well as logograms, syllabograms and the like.

In some implementations, but not necessarily, the multimodal machine learning model 110 includes a text encoder 114 that processes the sequence of text to represent the text as a series of text tokens from a vocabulary of text tokens, e.g. that each represent words, wordpieces or characters in a natural or computer language.

In some implementations the second multimodal input 116 comprises an image or video. In these implementations the second multimodal input 116 may comprise image data defining color or intensity values for pixels of a still or moving image in one, two, or three dimensions. As used herein "image" includes a LIDAR point cloud, and the image data may also or instead define the locations of points of a still or moving point cloud. As another example, an image or video received by the second multimodal input 116 may comprise a neural 3D representation, e.g. that represents a 3D scene as a set of latent feature vectors, e.g. a neural radiance field representation.

In some implementations, but not necessarily, the multimodal machine learning model 110 includes second multimodal input encoder 118 that processes the second multimodal input, e.g. using one or more convolutional, attention, fully connected, or recurrent layers, to generate the encoded version of the second multimodal input. In general the encoder 118 may implement any form of encoding appropriate for the type of data to be encoded. Merely as an example, where the second multimodal input 116 comprises an image or video the encoder 118 may comprise a vision encoder. The image or video may be encoded, e.g., as features for each of a set of patches that tile the image, or as a sequence of visual tokens selected from a vocabulary of visual tokens, or as a representation of distinct objects in the visual input. Such visual tokens may, but need not be, interleaved with text tokens processed by the model.

The model output 122 may comprise any form of output appropriate to the machine learning task performed by the multimodal machine learning model 110. In some implementations the model output 122 comprises text in a natural or computer language that defines a result of the task, e.g. for tasks such as image captioning, visual question answering, or object detection or instance segmentation. Also or instead the model output 122 may comprise data defining an image, video or audio object, e.g. in a generative task; or the model output 122 may comprise non-textual action selection data for selecting an action to be performed by an agent controlled by the model. As another example the model output 122 may also or instead define an intermediate step to be performed during the task, e.g. a call to a software API for a software tool that is used when performing the task; the multimodal input may then receive an output from the software tool that is used to generate a final model output 122 that performs the task. A few particular examples of model output are given later.

In implementations the multimodal machine learning model 110 includes one or more joint processing neural network layers 120 that jointly process data from the text input 112 and the second multimodal input 116 to generate the model output 122. As some examples, data from the text input 112 can be processed conditioned on the encoded version of the second multimodal input 116, or vice-versa; or one or more cross-attention layers can be used to enable data from data from the text input to attend to data from the second multimodal input, or vice-versa, to provide fused multimodal input data; or the multimodal input data may be fused in some other way, e.g. by concatenation; or a series of text tokens and tokens derived from the second multimodal input, e.g. visual tokens, can be processed by a shared set of processing layers, e.g. configured as a transformer neural network encoder and/or decoder.

Merely as one particular example the joint processing neural network layers 120 may comprise a transformer neural network, i.e. a neural network with a transformer architecture, e.g. a transformer encoder and/or transformer decoder neural network. In general such a transformer neural network may be characterized by having a succession of self-attention neural network layers. A self-attention neural network layer has an attention layer input for each element of the input and is configured to apply an attention mechanism over the attention layer input to generate an attention layer output for each element of the input. There are many different attention mechanisms that may be used.

Some example multimodal machine learning models with which the techniques described herein may be used include: Flamingo (Alayrac et al. arXiv:2204.14198); ALIGN (Jia et al., arXiv:2102.05918); PaLI (Chen et al. arXiv:2209.06794); and PaLI-X (Chen et al. arXiv:2305.18565).

In some implementations, the second multimodal input 116 may include an observation 166 characterizing an environment 164 of an agent 160 performing a task, e.g. a mechanical agent or software agent. The observation 166 may characterize the environment at a particular time step and the model output 112 may define one or more actions 162 to be performed by the agent at the time step. For example each action may be expressed as a sequence of text, e.g. as one or more characters such as letters and numbers, that represents the action, or as text that defines a low-level "skill" from a set of skills; or the model output 112 may, e.g., define parameters of a probability distribution from which an action is selected. Optionally the text received by text input 112 may include text describing the task to be performed. Optionally the text input may include a description of one or more actions performed at a preceding time step. Where the agent is a software agent the model output 112 may comprise a text output for calling a software API at a time step, and the model input at a subsequent time step, e.g. the text input 112, may comprise a response from the software agent, e.g. from the API.

Some examples of multimodal machine learning models controlling an agent, and with which the techniques described herein may be used, are described in: PaLM-E (Driess et al. arXiv:2303.03378); RT-1 (Brohan et al. arXiv:2212.06817); and RT-2 (Brohan et al. arXiv:2307.15818).

As previously described, in some implementations the multimodal machine learning model 110 can have one or more further multimodal inputs. For example the model may include an audio input, or an agent action input to receive agent action data representing an action of an agent performing a task in an environment. Data received in this way may be jointly processed with data from the text input 112 and second multimodal input 116 to generate the model output 122.

The multimodal machine learning model 110 has a multimodal input and can, in implementations, perform a range of different tasks. However in implementations not every task that the model performs requires a multimodal input, e.g. a task to generate an image from a text description of the image, or an image captioning task. Further, in some implementations, after training, the text input can be used to specify a particular task that is to be performed by the multimodal machine learning model 110, e.g. by providing a "prompt" to the model describing the task to be performed or giving an example of the task as a prompt to the model. Such prompts may optionally be included in the task-specific training data items, described below.

The multimodal machine learning model 110 is configured to process the multimodal input in accordance with the learnable parameters of the multimodal machine learning model, to generate the model output 122 that defines a result of one or more machine learning tasks. The neural network training system 100 includes a training engine 150 to train the multimodal machine learning model 110, i.e. to update values of the learnable parameters, to perform the machine learning task(s), using training data items stored in one or more noisy training datasets 130a,b and in one or more further, in particular task-specific training datasets 140a,b. In general each training data item comprises multimodal data for use in training the multimodal machine learning model 110, e.g. using a self-supervised training objective.

Each of the noisy training datasets 130a,b stores "noisy" training data items. Each noisy training data item comprises an example sequence of text and an example of the second modality input, e.g. an example image or video. In general the example sequence of text and the example of the second modality input are semantically related to one another, but the training data items in datasets 130a,b are collectively referred to as "noisy" because for some of the noisy training data items the example sequence of text, more particularly a semantic content of the example sequence of text, can be unrelated to a semantic content of the example of the second modality input.

In a typical noisy training dataset there can be some training data items that include examples of the particular machine learning task or tasks that the multimodal machine learning model 110 is being trained to perform, but there can also be many more training data items in which the particular machine learning task is not performed. For example, in each of the one or more noisy training datasets, the machine learning task may be performed in a minority of the noisy training data items, e.g. in less than 50%, 10% or 1% of the noisy training data items. Depending on the task, there may be no examples of the particular machine learning task in the noisy training dataset(s).

As an illustration, a noisy training dataset comprising semantically related, and sometimes matched, text and image or video data and may be obtained from web pages, e.g. from images or videos and their corresponding alt-text (text from the HTML or XHTMI, alt attribute); or from web pages where images or video and text are interleaved with one another. One example of such a dataset is WebLI (Web Language Image, Chen et al. arXiv:2305.18565v1). Such a dataset can be termed noisy because it can include text that is not useful for training, such as "click to enlarge", "stock photo" "embedded image permalink", and more generally text tokens that are unrelated to a semantic content of the image. Noisy training datasets for other types of second modality input can similarly be obtained from web pages.

Typically such a noisy training dataset is generated automatically.

In general each of the noisy training datasets 130a,b, whilst not necessarily of high quality, can be a very large dataset. For example each of the noisy training datasets 130a,b may include more than $10^9$ noisy training data items.

The one or more further training datasets 140a,b are each of high quality but typically at least one or two orders of magnitude smaller, e.g. having less than $10^8$ training data items, or less than $10^7$ training data items. In some implementations the further training datasets 140a,b can comprise or consist of training data items that have been generated by human labelling of training data. In implementations where there are multiple further training datasets 140a,b, these may comprise datasets for training the multimodal machine learning model 110 to perform the same machine learning task, and/or datasets for training the multimodal machine learning model 110 to perform different respective machine learning tasks.

The one or more further training datasets 140a,b each comprises or consists of task-specific training data items. Each task-specific training data item comprises a task-specific sequence of text and a task-specific example of the second modality input. Each task-specific training data item comprises an example of the machine learning task being performed, e.g. including an example of the model output for the task.

There are many such further, in particular task-specific training datasets; a few examples for visual tasks are the Visual Genome dataset for Visual Question Answering (Krishna et al., arXiv:1602.07332); Objects365 (Shao et al., "Objects365: A large-scale, high-quality dataset for object detection", IEEE/CVF international conference on computer vision, pages 8430-8439); Open Images V4 (Kuznetsova et al., arXiv:1811.00982); the SBU dataset (Ordonez et al. "Im2Text: Describing Images Using 1 Million Captioned Photographs", NeurIPS 2011); the Conceptual Captions datasets, e.g. V1 (2M images) or V2 (10M images) (Sharma et al., "Conceptual Captions: A Cleaned, Hypernymed, Image Alt-text Dataset For Automatic Image Captioning", ACL 2018); and Kinetics for video (Kay et al., arXiv:1705.06950).

An example task-specific training dataset for audio data is AudioSet (Gemmeke et al., "Audio set: An ontology and human-labeled dataset for audio events," ICASSP, IEEE, 2017, pp. 776-780). An example task-specific training dataset for agent (robot) control is described in Ebert et al., arXiv:2109.13396.

In some cases a task-specific training dataset may comprise or consist of task-specific training data items that have been manually generated by a human being. However, also or instead a task-specific training dataset may be generated automatically using existing tools. For example an OCR (Optical Character Recognition) task dataset may be generated by applying an OCR tool to a corpus of images; or an object detection task that requires generating object bounding-box coordinates may be generated by applying an existing object detection tool, such as a trained neural network, to a corpus of images; or a set of aligned image and text representations may be generated using ALIGN (Jia et al., arXiv:2102.05918); or instruction-annotated robot trajectories may be obtained as described in Brohan et al., arXiv:2212.06817, in either the real-world or in simulation.

Where the machine learning task is performed in some of the noisy training data items, on average these may have a lower value of a training value metric than an average value of the training value metric for the task-specific training data items (where a lower value indicates that the training data is of less use in training the machine learning model). The training value metric may be determined in any of many different ways, e.g. it may represent a value of an objective function, e.g. loss function, used for training the machine learning model, or it may represent an information content of a training data item e.g. with respect to others of the training data items, or it may comprise a heuristic value e.g. a count of a number of words in the sequence of text in a training data item.

The training engine 150 is configured to train the multimodal machine learning model 110 to perform one or more the machine learning tasks using training data items from the noisy training datasets 130a,b and from the one or more further training datasets 140a,b, as described below. The training engine 150 can train the multimodal machine learning model 110 from scratch, or it can fine-tune the multimodal machine learning model 110.

In general, training the multimodal machine learning model 110 can involve, e.g. at each of a plurality of training iterations, obtaining a first set of two or more noisy batches of training data comprising primarily or exclusively noisy training data items selected from the one or more noisy training datasets 130a,b, and a second set of one or more task-specific batches of training data comprising primarily or exclusively task-specific training data items selected from the one or more further training datasets 140a,b. In implementations, but not necessarily, the batches are all the same size, i.e. they include the same number of training data items. However there are generally fewer batches of training data in the second set of batches than in the first set of batches. Some implementations of the training involve interleaving batches of noisy training data items from the noisy training dataset(s) with batches of task-specific training data items. Interleaving the training data in this way also facilitates training using large, but noisy training datasets. In implementations the batches of noisy training data items and the batches of task-specific training data items are obtained sequentially, as training progresses.

The multimodal machine learning model 110 is trained on all the batches of training data items, i.e. on the noisy batches of training data and on the task-specific batches of training data. In some implementations the training uses a self-supervised objective function, e.g. loss, i.e. one that does not require labelled training data. There are many forms of self-supervised objective function that can be used; a few examples are given later. In some implementations the training uses supervised learning. For example, a noisy training dataset may comprise labelled data items, and the example of the second modality input, e.g. image, in a noisy training data item may labelled by the example sequence of text in the noisy training data item, or vice-versa.

In general training the multimodal machine learning model 110 involves backpropagating gradients of an objective function, e.g. of a self-supervised objective function, (with respect to the learnable parameters) to update the learnable parameters of the multimodal machine learning model, using any appropriate gradient descent optimization algorithm, e.g. Adam or another optimization algorithm.

In implementations the objective function, e.g. the self-supervised objective function, is evaluated for each of the batches of training data items (noisy and task-specific). In implementations and as described further later, gradients of the objective function, e.g. of the self-supervised objective function, for different batches of the training data items are accumulated or averaged over the different batches, e.g. using respective weights, before performing an update step to update the learnable parameters of the multimodal machine learning model.

The training described herein involves disproportionately training the multimodal machine learning model 110 using the noisy batches of training data. For example this can be done by training the multimodal machine learning model 110 using a proportion of noisy training batches in the training data, i.e. a proportion of noisy training batches in a total number of noisy and task-specific batches in both the first and second sets of batches of training data, that is greater than a proportion of a number of the noisy training datasets in a total number of the (noisy and task-specific) training datasets. The proportion of noisy training batches may be determined according to a number of noisy training batches expressed as a fraction of the total number of noisy and task-specific batches of training data.

Put differently, in implementations a ratio of a number of noisy batches (in the first set of batches) to a number of task-specific batches (in the second set of batches) is greater than the ratio of the number of noisy training datasets to the number of further training datasets.

These techniques can, counter-intuitively, enable relatively small further, in particular task-specific training datasets to substantially improve the performance of a multimodal machine learning model on one or more specific machine learning tasks (once trained), where other approaches can result in a performance drop on metrics of interest.

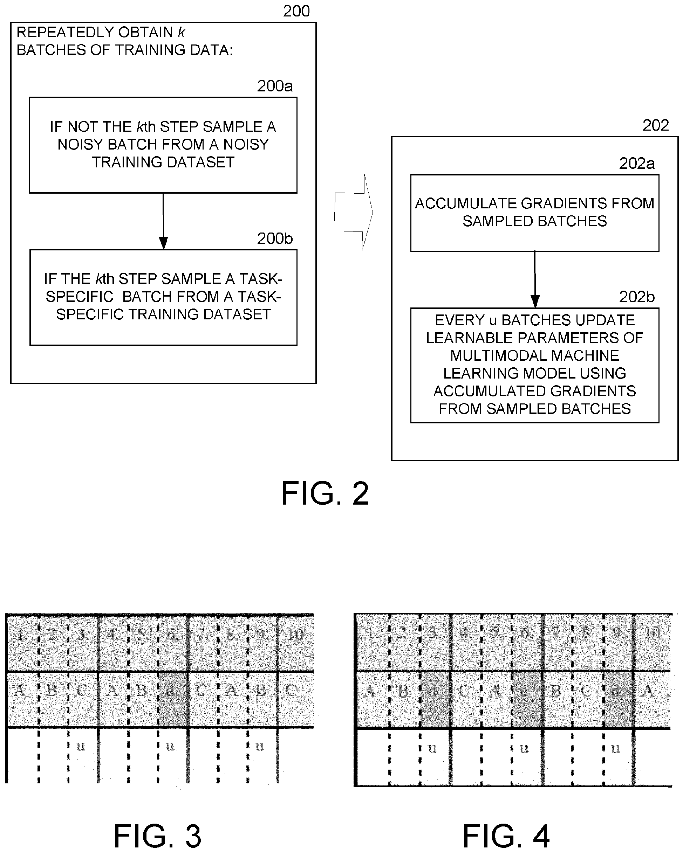

FIG. 2 is a flow diagram of a first example process for training a multimodal machine learning model, such as the multimodal machine learning model 110. The process of FIG. 2 can be performed by a system of one or more computers located in one or more locations, e.g. by the neural network training system 100 of FIG. 1.

In this example the training involves selecting a batch of task-specific training data items every $k$th batch where, e.g., $k > 3, 10, 30, 100, 500$, or $1000$, and selecting a batch of noisy training data items otherwise. In implementations $k - 1$ is greater than the number of noisy datasets, so that the noisy training data batches are disproportionately represented. The multimodal machine learning model is trained more frequently than every $k$th batch, i.e. the learned parameters of the multimodal machine learning model are updated more frequently than every $k$th batch. For example the learned parameters of the multimodal machine learning model can be updated every $n$ batches (steps) where $n$ is the number of noisy training datasets. The learned parameters are updated based on gradients of the training objective function, e.g. of the self-supervised objective function, for one or more batches. The gradients of the objective function, e.g. of the self-supervised objective function, may be accumulated over multiple batches of training data before performing an update step to update the learned parameters.

In more detail, a process 200 involves repeatedly obtaining $k$ batches of training data items. Another process 202, which can operate in parallel with process 200, updates the learnable parameters of the multimodal machine learning model every u batches of training data items, in particular using the accumulated gradient. In general $u < k$. In some implementations $u$ is equal to the number of noisy training datasets; this can facilitate optimization.

At a succession of steps process 200 samples noisy batches of training data from the one or more noisy training datasets 130a,b (step 200a) unless at the $k$th sampling step, in which case a task-specific batch of training data is sampled from the one or more further training datasets 140a,b (step 200b).

Where there are multiple noisy training datasets or multiple further training datasets each noisy training dataset, and/or task-specific training dataset, may be sampled in turn, e.g. by maintaining a respective round robin iterator to iterate over each of the multiple noisy and/or further training datasets.

In process 202 gradients of the training objective function, e.g. of the self-supervised objective function, are accumulated from the sampled batches (step 202a) to determine a cumulative gradient of the training objective function, e.g. of the self-supervised objective function, and every $u$ batches the learnable parameters of the multimodal machine learning model 110 are updated based on the cumulative gradient (step 202b).

The method can be implemented in a parallel processing computer system comprising at least two hardware computing devices operating in parallel. Then a first of the hardware computing devices can be used to perform operations to repeatedly obtain $k$ batches of training data items. In parallel with the operations performed by the first of the hardware computing devices using a second of the hardware computing devices can be used to update the learnable parameters of the multimodal machine learning model every $u$ batches of training data items using the cumulative gradient, and in implementations also to accumulate the gradients to determine the cumulative gradient.

FIG. 3 illustrates the operation of an example process where there are three noisy training datasets, A, B, C and one task-specific training dataset, d. The upper row of numbers indicates the sampling step; the middle row indicates the sampled dataset, and a "$u$" in the lower row indicates when the learned parameters are updated. In the example of FIG. 3, $k = 6$ and $u = 3$.

FIG. 4 illustrates the operation of an example process where there are three noisy training datasets, A, B, C and two further training datasets, d, e. In the example of FIG. 4, $k = 3$ and $u = 3$. Where, as in this example, there are multiple noisy and multiple further training datasets, the process can maintain two round-robin iterators, a first iterator for the noisy training datasets and a second iterator for the further training datasets, from which samples are drawn with different frequencies. Each iterator specifies a schedule of respective training datasets to sample from when sampling a batch, i.e. iterates over the respective training datasets. At every $k$th step a task-specific batch is sampled from a task-specific training dataset specified by the second iterator. For each of the other $k - 1$ steps a noisy batch is sampled from a noisy training dataset specified by the first iterator.

In some implementations the cumulative gradient used for the learnable parameter updates is determined as a weighted combination of the gradients of the objective function, e.g. of the self-supervised objective function, determined from the sampled batches (where the weights may, but need not, sum to unity). For example, for the first update in FIG. 4 the cumulative gradient may be determined as equal to $w_A g_A + w_B w_B + w_d g_d$, where $g_A$, $g_B$, $g_d$ and $w_A$, $w_B$, $w_d$ are gradients and gradient weights corresponding to batches from datasets A, B and d, respectively. That is, in some implementations each dataset has a respective weight that is used to weight the gradients determined using that dataset when determining the cumulative gradient used for updating the learned parameters of the multimodal machine learning model 110.

Although in the above examples $k$ is small, in some practical implementations $k$ may be much larger, e.g. of order 100 or 1000. A value for $k$ may be determined by a hyperparameter sweep, i.e. by trying different values of $k$ to see which gives the best results as determined by performance on a test dataset. Where gradients are weighted as described above the weights may similarly be determined by a hyperparameter sweep. As some examples, a weight for a task-specific training dataset may have a value of order 0.1 or of order 0.01.

In some implementations instead of iterating over the datasets a different approach may be employed. For example multiple noisy batches may be sampled from the same noisy training dataset, or stochastic sampling of batches from the datasets may be employed. When using stochastic sampling, in general a probability of sampling from the task-specific dataset(s) should be smaller than a probability of sampling from the noisy training dataset(s).

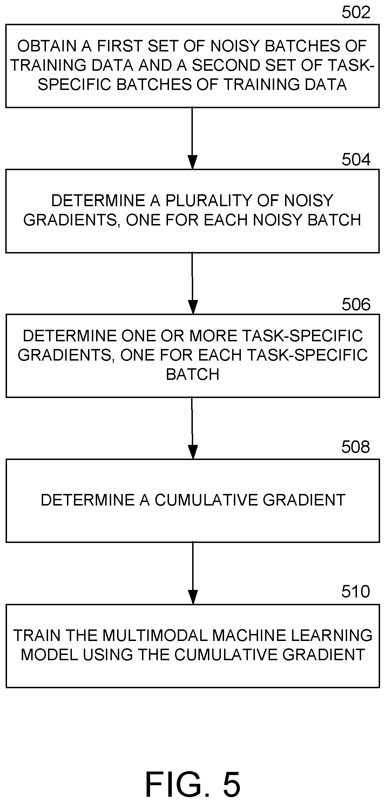

FIG. 5 is a flow diagram of a second example process for training a multimodal machine learning model, such as the multimodal machine learning model 110. The process of FIG. 5 can be performed by a system of one or more computers located in one or more locations, e.g. by the neural network training system 100 of FIG. 1.

The training may involve obtaining a first set of the two or more noisy batches of training data, and a second set of the one or more task-specific batches of training data with fewer batches of training data in the second set than in the first set as previously described (step 502).

The process may then determine a plurality of noisy gradients of the training objective function, e.g. of the self-supervised objective function, one for each noisy batch of the first set of noisy batches of training data (step 504), and one or more task-specific gradients of the training objective function, e.g. of the self-supervised objective function, one for each task-specific batch of the second set of task-specific batches of training data (step 506). The process may then determine a cumulative gradient from a combination of the noisy gradients and the one or more task-specific gradients, e.g. from a weighted combination of these gradients each weighted by a different respective weight (step 508). The multimodal machine learning model 110 can then be trained using the cumulative gradient, e.g. backpropagating the cumulative gradient to update learnable parameters of the multimodal machine learning model (step 510).

In implementations where there is a plurality of noisy training datasets, as illustrated in FIGS. 3 and 4, the training may involve performing a first set of updates of the learnable parameters of the multimodal machine learning model using just the noisy batches of training data, and performing a second set of updates of the learnable parameters of the multimodal machine learning model using both the noisy batches of training data and one of the, e.g. a single one of the, task-specific batches of training data.

In general there are many different types of objective function that may be used when training the multimodal machine learning model 110, and the described techniques are not limited to any particular type of objective function. Merely as an example a self-supervised objective function may be used when training the multimodal machine learning model 110. As one particular example the model may be trained using a softmax cross entropy loss, e.g. using language model style teacher forcing with a softmax cross entropy loss. As another particular example the model may be trained with an autoregressive negative log likelihood (NLL) loss, such as $-\sum_{l=1}^{L} \log p(y_l | y_{<l}, x_{\leq l})$ for a multimodal input comprising a sequence of text encoded as $L$ tokens with the lth text token $y_l$ conditioned on preceding second modality inputs $x_{\leq l}$, such as one or more images or videos, and conditioned on preceding text tokens $y_{<l}$. As another particular example the model may be trained with a masking loss, e.g. a loss that requires the model to predict masked-out data such as masked out text tokens.

Some implementations of the technique work particularly well with contrastive learning, especially when this is done using counter-examples selected only from within the same batch of training data items. Thus in some implementations the multimodal machine learning model is trained using a self-supervised objective function that comprises a contrastive loss function. Such a contrastive loss function is dependent upon a positive example and one or more negative examples. The positive example comprises a sequence of text and an example of the second modality input selected from the same training data item, either noisy or task-specific. Each of the one or more negative examples comprises a sequence of text from one training data item and an example of the second modality input, e.g. an image or video, from a different training data item, e.g. random pairings of text and second modality inputs other than the positive example. In implementations the positive and negative examples are from the same batch of training data items.

As an example, in some implementations the contrastive loss function comprises a numerator term that represents a similarity measure for the positive example, i.e. that represents a similarity between the selected sequence of text and the selected second modality input according to the similarity measure. The contrastive loss function also comprises a denominator term that represents a sum of the same similarity measure evaluated for the negative example(s). An example contrastive loss may be determined as $-\log \frac{e^{sim(y_i, x_i)}}{\sum_{other\ pairs} e^{sim(y_i, x_j)}}$ where $sim(\cdot, \cdot)$ denotes a similarity measure such as dot product similarity, $y_i$ denotes sequence of text, $x_i$ the corresponding second modality input, and $x_j$ another second modality input in the batch; the sum can run over all the other pairs of training data items in the batch (e.g. $j = 1..N$; the loss may be scaled by $\frac{1}{N}$). Optionally such a contrastive loss function may be symmetrized by combining, e.g. summing, a first loss derived from matching a selected sequence of text to a selected second modality input, and a second loss derived from matching a selected second modality input to a selected sequence of text.

In general the multimodal machine learning model 110 can be trained to perform any sort of machine learning task or tasks. Implementations of the described techniques enable the model to be trained so that it is able to perform multiple different machine learning tasks.

After the multimodal machine learning model 110 has been trained it can be deployed for use in performing the machine learning task(s). For instance, the machine learning model can be deployed in an environment that enables users to provide requests for the machine learning model to process specified multimodal inputs to generate corresponding model outputs. Users can provide the requests, e.g., by way of a user interface or through an application programming interface (API). The requests can be transmitted from a user device (e.g., over a data communication network, e.g., the internet) to one or more computers implementing the machine learning model, e.g., in a data center. The machine learning can process multimodal inputs specified by user requests to generate corresponding model outputs, and then transmit the model outputs to user devices (e.g., over a data communication network).

In implementations, after training, a particular task that is to be performed by the multimodal machine learning model 110 can be described by part or all of the sequence of text in the multimodal input to the model. For example in a multimodal input that includes an image, video, or audio item such a prompt might specify "Generate a caption", "Generate a description", "Answer the following question: [about the image, video, or audio item]", or "Detect a person". Where the model is used for an agent control task a prompt may define "Take the knife out of the drawer", or "Q: What action should the robot take to take the knife out of the drawer?". Also or instead such a prompt may give one or more examples of a task to be performed. The multimodal machine learning model 110 can be trained on multiple natural and/or computer languages and the prompt may then specify a language to use.

A few examples of machine learning tasks follow.

For some tasks the second modality input represents an image or video as previously described, e.g. from a camera or other imaging device that captures the image or video from a real-world environment, and/or audio, e.g. audio data such as speech or other sounds captured from a real-world environment. In general the tasks described below may be tasks that require spatial awareness or other context from the image, video, or audio item. For example, a prompt may ask "What is the object in the top left corner?", or "What was the answer to the spoken question?".

As one example the task may comprise an object or action detection task. A task-specific training data item may comprise an image, video, or audio item containing one or more objects or actions, and a sequence of text. The sequence of text may describe or otherwise label the object(s) or action(s) and (for an image or video) may include text giving bounding box coordinates for the object(s) or action(s). After training, when the model is used in inference, the model output 122 may comprise or represent text that describes or otherwise labels detected object(s) or action(s) in the second modality input, and may (for an image or video) include bounding-box coordinates for the detected object(s) or action(s), e.g. " 10 20 90 100 cat 20 30 100 100 dog".

As another example the task may comprise a classification task, e.g. an object or action classification task. A task-specific training data item may comprise an image, video, or audio item containing one or more objects or actions and a sequence of text. The sequence of text may describe or otherwise classify the object(s) or action(s). After training, when the model is used in inference, the model output 122 may comprise data, e.g. text, that classifies the object(s) or action(s) in the second modality input into one of a plurality of classes.

As another example the task may comprise an image, video, or audio item describing task, e.g. a captioning task (which, as used here, includes an audio description task to explain what is happening in a video). A task-specific training data item may comprise an image, video, or audio item and a sequence of text describing the image, video, or audio item. After training, when the model is used in inference, the model output 122 may comprise data, e.g. text, describing an image, video, or audio item in the second modality input. For example the model output 122 may provide a caption or description for a second modality input item, or it may count objects in the second modality input item, or it may provide some other form of description of the second modality input item.

As another example the task may comprise an image, video, or audio question-answering task. A task-specific training data item may comprise an image, video, or audio item and a sequence of text that describes the image, video, or audio item. After training, when the model is used in inference, the model output 122 may comprise data, e.g. text, that answers a question about the second modality input specified in a prompt sequence of text, e.g. as described above. This may be used, e.g., to answer questions about visual plots and charts or about sounds.

As another example the task may comprise a character or word recognition task, e.g. an OCR (optical character recognition) task. A task-specific training data item may comprise an image, video, or audio item and a sequence of text that includes text that is depicted in the image or video, or that is represented as speech in the audio item. After training, when the model is used in inference, the model output 122 may comprise text that represents characters or words in the second modality input, e.g. in a natural language.

As another example the task may comprise a still or moving image or audio generation task. A task-specific training data item may comprise an image, video, or audio item and a sequence of text that describes the image, video, or audio item. After training, when the model is used in inference, the model output 122 may comprise data for an image, video, or audio item, e.g. image data defining values for pixels of a still or moving image or audio data representing values of an audio waveform, and the sequence of text in the multimodal input to the model may describe or characterize the image, video, or audio item to be generated.

As another example the task may comprise a computer language text generation task. A task-specific training data item may comprise an image, video, or audio item and a sequence of text in a computer language for generating the image, video, or audio item. After training, when the model is used in inference, the model output 122 may comprise text in the or another computer language for generating or rendering an image, video, or audio item in the second modality input, e.g. a web page, plot, or chart.

In another example of a computer language text generation task a task-specific training data item may comprise an image, video, or audio item and a sequence of text in a computer language for performing a task in relation to the image, video, or audio item, e.g. a data processing task that involves analyzing the content of the image, video, or audio item to provide a result of the analysis or, e.g., a search to search for information relating to the content of the image, video, or audio item. The computer language in the model output may comprise computer language for invoking a function or calling one or more external APIs. Merely as one example, such an output may be formatted as a JSON object. As previously, the sequence of text in the multimodal input may define the task to be performed and the second modality input may comprise, e.g. an image, video, or audio item in relation to which the task is to be performed, e.g. a task that involves manipulation of particular types of data that may benefit from access to an API such as mathematical data, date/time related data, scientific data, recent data that may post-date training of the model (that may be accessed by a search function or API), and so forth. After training, when the model is used in inference, the model output 122 may comprise text in the or another computer language for performing a task, e.g. as described above, in relation to an image, video, or audio item in the second modality input. The method may then include using the text in the computer language to perform the task.

In general where the model output 122 comprises text this may be provided as speech representing the text.

In some implementations the machine learning task comprises an agent control task in which the agent interacts with an environment to perform the agent control task. In these implementations the multimodal input includes an observation characterizing the environment. For example the multimodal input can include a sequence of text that defines the task to be performed by the agent and the second modality input can represents an image, video, audio, or other observation of the environment, e.g. captured by a camera or other imaging device, or by a microphone, from a real-world environment. A task-specific training data item may comprise a sequence of text representing one or more actions of the agent, and a second modality input representing an observation of the environment. After training, when the model is used in inference, the model output 122 comprises an action selection output, e.g. including text, that is used to select one or more actions to be performed by the agent in the environment in response to the observation. As an illustration the model output 122 may define an action as text such as "A: 132 114 128 5 25 156", that can be converted into a control signal for a mechanical agent, such as a robot, e.g. "$\Delta T$ = [0.1, -0.2,0] $\Delta R$ = [10°, 25°, -7°]". As another example the action selection output may also or instead define one or more low-level skills, e.g. from a vocabulary of previously learnt skills. As before, the sequence of text in the multimodal input to the model may describe the task to be performed, e.g. "What action should the robot take to [perform task]".

In some agent control implementations, the environment is a real-world environment and the agent is a mechanical agent interacting with the real-world environment, e.g., a robot or an autonomous or semi-autonomous land, air, or sea vehicle operating in or navigating through the environment, and the actions are actions taken by the mechanical agent in the real-world environment to perform the task. For example, the agent may be a robot or other mechanical agent interacting with the environment to accomplish a specific task, e.g., to locate or manipulate an object of interest in the environment or to move an object of interest to a specified location in the environment or to navigate to a specified destination in the environment. In these implementations, the observations may include, e.g., one or more of: images, object position data, and sensor data to capture observations as the agent interacts with the environment. The actions may define control signals to control the robot or other mechanical agent, e.g., positions, torques, or other control signals for the parts of the mechanical agent, or higher-level control commands.

In some agent control implementations the agent can be a software agent, i.e. a computer program, configured to perform a task. Some examples where the agent is a software agent now follow.

As one example the environment may be an integrated circuit design and the task may be a routing task for routing interconnection lines of the integrated circuit. The observations may be of component positions and/or interconnections, and the actions may comprise component placing or interconnect routing actions. An integrated circuit with interconnection lines routed as determined may then be fabricated.

As another example the environment may be a real-world computing environment and the task may be to manage the distribution of jobs or tasks across computing resources e.g. on a mobile device and/or in a data center. The observations may include observations of computing resources such as compute or memory capacity, or Internet-accessible resources, or that relate to the operation of the computing resources in processing the jobs or tasks; and the actions may include assigning jobs or tasks to particular computing resources.

As another example the environment may be a real-world computing environment and the task is to manage the processing, e.g. by one or more real-world servers, of a queue of continuously arriving jobs. The observations may comprise observations of the times of departures of successive jobs, or the time intervals between the departures of successive jobs, or the time a server takes to process each job, or the arrival times, or time intervals between the arrivals, of successive jobs, or data characterizing the type of job(s). The actions may comprise actions that allocate particular jobs to particular computing resources.

As another example the environment may comprise a real-world computer system or network and the task may be to maintain security of the computer system or network. The observations may comprise any observations characterizing operation of the computer system or network, and the actions may comprise actions to control the operation e.g. to limit or correct abnormal or undesired operation e.g. because of the presence of a virus or other security breach.

As another example the environment may comprise a data packet communications network environment, and the task may be to route packets of data over the communications network. The actions may comprise data packet routing actions and the observations may comprise, e.g., observations of a routing table which includes routing metrics such as a metric of routing path length, bandwidth, load, hop count, path cost, delay, maximum transmission unit (MTU), and reliability.

In some agent control implementations the agent may be a human agent and the environment may be a real-world environment. For example the agent can be a human user of a digital assistant such as a smart speaker, smart display, or some other device that is used to instruct the user to perform actions. The task may be any real-world task that the user wishes to perform. The observations may be obtained from an observation capture subsystem, e.g. a monitoring system such as a video camera or sound capture system, to capture visual and/or audio observations of the user performing the task. The actions may comprise instructions in the form of, e.g., text, image, video, or audio data such as speech, that guide the user in performing the task.

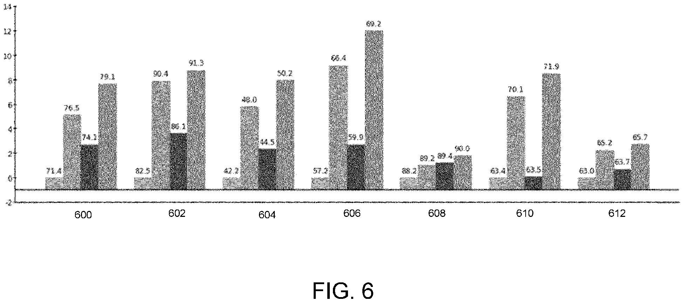

FIG. 6 illustrates the performance of some example implementations of the described training methods on seven different visual understanding benchmark datasets. The y-axis indicates difference in model performance in arbitrary units; absolute model performance is indicated at the top of each bar. Datasets 600 and 604 relate to text to image tasks; datasets 602 and 606 relate to image to text tasks; dataset 608 relates to SVO (Subject-Verb-Object) probes of images; dataset 610 relates to ARO (Attribute-Relation-Order) probes of images; dataset 612 relates to a VALSE (Vision And Language Structured Evaluation) evaluation.

In each of the sets of four bars giving the results for a dataset, the second and fourth bars represent results of training a multimodal machine learning model using the techniques described herein, whilst the first and third bars represent an approach in which in which the model is trained on each dataset in turn. It can be seen that the described techniques provide significant performance improvements.

In each set of four bars, the third and fourth bars represent models with twice the number of learnable parameters as the first and second bars. From this it can be seen that in these examples the described techniques provide a greater performance improvement than doubling the number of model parameters. It can also be seen that the performance improvements scale with increasing model size.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

In this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

**Claims**

1. A computer-implemented method of training a multimodal machine learning model to perform a machine learning task, wherein the multimodal machine learning model has a multimodal input configured to receive a first modality input representing a sequence of text and a second modality input, and to jointly process an encoded version of the text and an encoded version of the second modality input, in accordance with learnable parameters of the multimodal machine learning model, to generate a model output that defines a result of the machine learning task, the method comprising:

obtaining one or more noisy training datasets comprising noisy training data items, each noisy training data item comprising an example sequence of text and an example of the second modality input, and wherein for some of the noisy training data items in each noisy training dataset the example sequence of text is unrelated to a semantic content of the example of the second modality input;

obtaining one or more further training datasets, smaller than each of the noisy training datasets and comprising task-specific training data items, each task-specific training data item comprising a task-specific sequence of text and a task-specific example of the second modality input, wherein each task-specific training data item is an example of the machine learning task being performed;

obtaining two or more noisy batches of training data comprising primarily or exclusively noisy training data items selected from the one or more noisy training datasets;

obtaining one or more task-specific batches of training data comprising primarily or exclusively task-specific training data items selected from the one or more further training datasets; and

training the multimodal machine learning model on the noisy batches of training data and on the task-specific batches of training data; the method including:

disproportionately training the multimodal machine learning model using the noisy batches of training data.

2. The method of claim 1, wherein the task-specific training dataset is at least one order of magnitude or two orders of magnitude smaller than each of the one or more noisy training datasets; and wherein disproportionately training the multimodal machine learning model using the noisy batches of training data comprises training the multimodal machine learning model using a proportion of noisy training batches in the training data that is greater than a proportion of a number of the noisy training datasets in a total number of the training datasets.

3. The method of any one of claims 1-2, wherein, in each of the one or more noisy training datasets, the machine learning task is performed in a minority or none of the noisy training data items.

4. The method of claim 3, wherein the noisy training data items for which the machine learning task is performed have, on average, a lower value of a training value metric than an average value of the training value metric for the task-specific training data items.

5. The method of any one of claims 1-4, comprising:

obtaining a first set of the two or more noisy batches of training data;
obtaining a second set of the one or more task-specific batches of training data, wherein there are fewer batches of training data in the second set than in the first set; and
training the multimodal machine learning model on interleaved training data obtained by interleaving the first and second sets of batches of training data.

6. The method of any one of claims 1-5, wherein disproportionately training the multimodal machine learning model using the noisy batches of training data comprises:
sequentially selecting batches of the training data items, selecting a batch of task-specific training data items every $k$th batch of training data items, where $k$ - 1 is greater than the number of noisy datasets, and selecting a batch of noisy training data items otherwise.

7. The method of claim 6, implemented in a parallel processing computer system comprising at least two hardware computing devices operating in parallel, and wherein disproportionately training the multimodal machine learning model using the noisy batches of training data further comprises:

using a first of the hardware computing devices to perform operations to repeatedly obtain $k$ batches of training data items;

accumulating gradients of a training objective function over $u$ batches of training data items to determine a cumulative gradient of the training objective function; and

using a second of the hardware computing devices to, in parallel with the operations performed by the first of the hardware computing devices, update the learnable parameters of the multimodal machine learning model every $u$ batches of training data items using the cumulative gradient, wherein $u < k$.

8. The method of any one of claims 1-7, wherein training the multimodal machine learning model further comprises:

obtaining a first set of the two or more noisy batches of training data;
obtaining a second set of the one or more task-specific batches of training data, wherein there are fewer batches of training data in the second set than in the first set;
determining a plurality of noisy gradients of a training objective function, one for each noisy batch in the first set of noisy batches of training data;
determining one or more task-specific gradients of the training objective function, one for each task-specific batch in the second set of task-specific batches of training data;
determining a cumulative gradient from a weighted combination of the noisy gradients and the one or more task-specific gradients; and
training the multimodal machine learning model using the cumulative gradient.

9. The method of any one of claims 1-8, comprising:

obtaining a plurality of the noisy training datasets; and
wherein training the multimodal machine learning model on the noisy batches of training data and on the task-specific batches of training data comprises:

performing a first set of updates of the learnable parameters of the multimodal machine learning model using just the noisy batches of training data, and
performing a second set of updates of the learnable parameters of the multimodal machine learning model using both the noisy batches of training data and one of the task-specific batches of training data.

10. The method of any preceding claim, wherein the noisy batches of training data comprise exclusively training data items selected from the one or more noisy training datasets; and wherein the task-specific batches of training data comprise exclusively training data items selected from the one or more further training datasets.

11. The method of any preceding claim, wherein one or more of the noisy training datasets is a training dataset that has been generated automatically, and wherein one or more of the further training datasets is a training dataset that comprises task-specific training data items that have been generated manually.

12. The method of any preceding claim, wherein training the multimodal machine learning model comprises:

training the multimodal machine learning model using a contrastive loss function that is dependent upon a positive example and one or more negative examples,
wherein the positive example comprises a sequence of text and an example of the second modality input from the same training data item, and
wherein each of the one or more negative examples comprises a sequence of text from one training data item and an example of the second modality input from a different training data item in the same batch of training data items.

13. The method of any one of claims 1-12, wherein:

i) the second modality input represents an image, video, or audio item, and wherein the machine learning task comprises one or more of: an object or action detection task, a classification task, a captioning task, a question-answering task, a character or word recognition task, an image or audio generation task, or a computer language generation task; or
ii) the machine learning task comprises an agent control task, wherein an agent interacts with an environment to perform the agent control task, wherein the multimodal input includes an observation of the environment, and wherein after training the model output is used to select one or more actions to be performed by the agent in the environment in response to the observation.

14. One or more non-transitory computer storage media storing instructions that when executed by one or more computers cause the one or more computers to perform operations of the respective method of any one of claims 1-13.

15. A system comprising:

one or more computers; and

**EP 4 553 714 A1**

one or more storage devices communicatively coupled to the one or more computers, wherein the one or more storage devices store instructions that, when executed by the one or more computers, cause the one or more computers to perform operations of the respective method of any one of claims 1-13.

FIG. 1

**200** REPEATEDLY OBTAIN *k* BATCHES OF TRAINING DATA:

**200a** IF NOT THE *k*th STEP SAMPLE A NOISY BATCH FROM A NOISY TRAINING DATASET

**200b** IF THE *k*th STEP SAMPLE A TASK-SPECIFIC BATCH FROM A TASK-SPECIFIC TRAINING DATASET

**202**

**202a** ACCUMULATE GRADIENTS FROM SAMPLED BATCHES

**202b** EVERY u BATCHES UPDATE LEARNABLE PARAMETERS OF MULTIMODAL MACHINE LEARNING MODEL USING ACCUMULATED GRADIENTS FROM SAMPLED BATCHES

## FIG. 2

## FIG. 3

## FIG. 4

502

OBTAIN A FIRST SET OF NOISY BATCHES OF
TRAINING DATA AND A SECOND SET OF TASK-
SPECIFIC BATCHES OF TRAINING DATA

504

DETERMINE A PLURALITY OF NOISY
GRADIENTS, ONE FOR EACH NOISY BATCH

506

DETERMINE ONE OR MORE TASK-SPECIFIC
GRADIENTS, ONE FOR EACH TASK-SPECIFIC
BATCH

508

DETERMINE A CUMULATIVE GRADIENT

510

TRAIN THE MULTIMODAL MACHINE LEARNING
MODEL USING THE CUMULATIVE GRADIENT

# FIG. 5

FIG. 6

Europäisches
Patentamt

European
Patent Office

Office européen
des brevets

# EUROPEAN SEARCH REPORT

Application Number

EP 24 18 4109

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YONGSHUO ZONG ET AL: "Self-Supervised Multimodal Learning: A Survey", ARXIV.ORG, CORNELL UNIVERSITY LIBRARY, 201 OLIN LIBRARY CORNELL UNIVERSITY ITHACA, NY 14853, 4 August 2023 (2023-08-04), XP091586085, * abstract * * Sections 2.2, 3.1.1, 5.1.1, Appendix A * * figures 2, 5 * | 1-15 | INV. G06N3/0895 G06N3/045 G06N3/0464 G06N3/084 |
| A | YE YAN ET AL: "More Effective Distributed Deep Learning Using Staleness Based Parameter Updating", 7 December 2018 (2018-12-07), ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, PAGE(S) 401 - 416, XP047498875, ISBN: 978-3-319-10403-4 [retrieved on 2018-12-07] * abstract * * Section 1 * | 7 | |

TECHNICAL FIELDS
SEARCHED    (IPC)

G06N

The present search report has been drawn up for all claims

| Place of search | Date of completion of the search | Examiner |
|---|---|---|
| The Hague | 21 November 2024 | Bohn, Patrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ALAYRAC et al.** *arXiv:2204.14198*
- **JIA et al.** *arXiv:2102.05918*
- **CHEN et al.** *arXiv:2209.06794*
- **CHEN et al.** *arXiv:2305.18565*
- **DRIESS et al.** *arXiv:2303.03378*
- **BROHAN et al.** *arXiv:2212.06817*
- **BROHAN et al.** *arXiv:2307.15818*
- **CHEN et al.** Web Language Image. *arXiv:2305.18565v1*
- **KRISHNA et al.** *arXiv:1602.07332*
- **SHAO et al.** Objects365: A large-scale, high-quality dataset for object detection. *IEEE/CVF international conference on computer vision*, 8430-8439

- **KUZNETSOVA et al.** *arXiv:1811.00982*
- **ORDONEZ et al.** Im2Text: Describing Images Using 1 Million Captioned Photographs. *NeurIPS*, 2011
- **SHARMA et al.** Conceptual Captions: A Cleaned, Hypernymed, Image Alt-text Dataset For Automatic Image Captioning. *ACL*, 2018
- **KAY et al.** *arXiv:1705.06950*
- Audio set: An ontology and human-labeled dataset for audio events. **GEMMEKE et al.** ICASSP. IEEE, 2017, 776-780
- **EBERT et al.** *arXiv:2109.13396*